# EUROPÄISCHE PATENTSCHRIFT

(11) **EP 1 432 648 B1**
(45) Veröffentlichungstag und Bekanntmachung des Hinweises auf die Patenterteilung: **07.09.2005**
(21) Anmeldenummer: 02781110.8
(22) Anmeldetag: 24.09.2002
(51) Int. Cl.: C02F 1/32

(54) **FILTERVORRICHTUNG MIT EINER UVC-LAMPE UND MIT EINER REINIGUNGSEINRICHTUNG FÜR DIE UVC-LAMPE**
FILTER DEVICE WITH A UVC LAMP AND A CLEANING ARRANGEMENT FOR SAID UVC LAMP
DISPOSITIF FILTRANT COMPRENANT UNE LAMPE A RAYONS ULTRAVIOLETS C ET UN DISPOSITIF DE NETTOYAGE POUR LADITE LAMPE A RAYONS ULTRAVIOLETS C

(30) Priorität: 25.09.2001 DE 10147019
(43) Veröffentlichungstag der Anmeldung: 30.06.2004
(73) Patentinhaber: Oase GmbH, 48477 Hörstel (DE)
(72) Erfinder: HOFFMEIER, Dieter, 49479 Ibbenbüren (DE)
(74) Vertreter: Meissner, Peter E.
(86) Internationale Anmeldenummer: PCT/DE2002/003591
(87) Internationale Veröffentlichungsnummer: WO 2003/027026

(56) Entgegenhaltungen:
- EP-A- 0 983 805
- WO-A-99/40032
- DE-A- 3 710 250
- DE-B- 1 283 762
- GB-A- 1 213 706
- US-A- 3 061 721

## Beschreibung

Die vorliegende Erfindung betrifft eine Filtervorrichtung mit einer UVC-Lampe zum Filtern von Fluiden, mit einem Lampengehäuse, das in einer Strömung des zu filternden Fluids angeordnet ist und eine Hauptachse aufweist.

Eine solche Filtervorrichtung ist aus dem Stand der Technik z. B. für die Filterung von Teichwasser bekannt. Eine UVC-Lampe erzeugt im Betrieb ein UV-Licht der C-Welle. Diese dient der Entkeimung des zu filternden Fluids. Aufgrund der Tatsache, daß eine solche UVC-Lampe in einer Filtervorrichtung in der Strömung von mehr oder weniger stark mit Schwebstoffen belasteten Fluiden angeordnet ist und mit diesen in Berührung kommt, wird die UVC-Lampe regelmäßig auf ihrer fluidseitigen Oberfläche verunreinigt und verliert dadurch ihre Filterwirkung.

Im Stand der Technik werden solche UVC-Lampen aus der Filtervorrichtung ausgebaut, um diese dann mit einem Lappen, einer Bürste o. dgl. manuell zu reinigen. Weil eine solche Reinigung ggf. regelmäßig und mit größerer Häufigkeit durchgeführt werden muß, sind in der Vergangenheit verschiedene Mechanismen entwickelt worden, die den Ein- und Ausbau der UVC-Lampe in einer solchen Filtervorrichtung vereinfachen und erleichtern.

Nach wie vor stellt aber der Ein- und Ausbau einer solchen UVC-Lampe zu Reinigungszwecken eine störende, zeitraubende Maßnahme dar, die den allgemeinen Filterbetrieb unterbricht.

Die Aufgabe der vorliegenden Erfindung ist daher, eine Filtervorrichtung zu schaffen, deren UVC-Lampe ohne Aus- und Einbau gereinigt werden kann; eine derartige Filtervorrichtung mit Reinigungselement zeigt z.B. das Dokument US 3 061 721.

Die Aufgabe wird gemäß Anspruch 1 dadurch gelöst, daß ein Reinigungselement in Berührung mit einer fluidseitigen Oberfläche des Lampengehäuses angeordnet ist und um eine mit der Hauptachse zusammenfallenden Drehachse drehbar ist.

Mit der erfindungsgemäßen Lösung ist es möglich, das Lampengehäuse ohne Aus- und Einbau zu reinigen, indem das Reinigungselement im eingebauten Zustand um das Lampengehäuse herum gedreht wird. So ist eine regelmäßige Reinigung der fluidseitigen Oberfläche des Lampengehäuses auf einfache Weise gewährleistet.

Für eine kontinuierliche Reinigung ist es vorteilhaft, wenn das Reinigungselement derart ausgebildet ist, daß die Strömung des zu filternden Fluids dieses in Drehung versetzt. Dies kann durch die Verwendung zweier, schraubenförmig verlaufender Reinigungselemente gemäß Anspruch 1 erreicht werden. Zusätzlich kann nach Anspruch 2 das Reinigungselement an seiner Drehachse mit einem Schaufelrad wirkverbunden sein, so daß die Strömung das Schaufelrad in Drehung versetzt und mittelbar dadurch auch das Reinigungselement.

Weiter Vorteile ergeben sich aus den Merkmalen der Unteransprüche 3-6.

Ausführungsformen der vorliegenden Erfindung werden im folgenden anhand der Zeichnungen näher beschrieben. Es zeigen:
- Fig. 1: eine schematische Ansicht der UVC-Lampe in der Filtereinrichtung mit einem selbstdrehenden Reinigungselement gemäß der vorliegenden Erfindung;
- Fig. 2: eine schematische Ansicht der UVC-Lampe in der Filtereinrichtung mit einem durch ein Schaufelrad angetriebenen Reinigungselement;
- Fig. 3: eine schematische Draufsicht der zweiten Ausführungsform mit nicht erfindungsgemäßen geraden Reinigungselement ist;
- Fig. 4: eine schematische Ansicht des Reinigungselements der ersten Ausführungsform ohne UVC-Lampe ist;

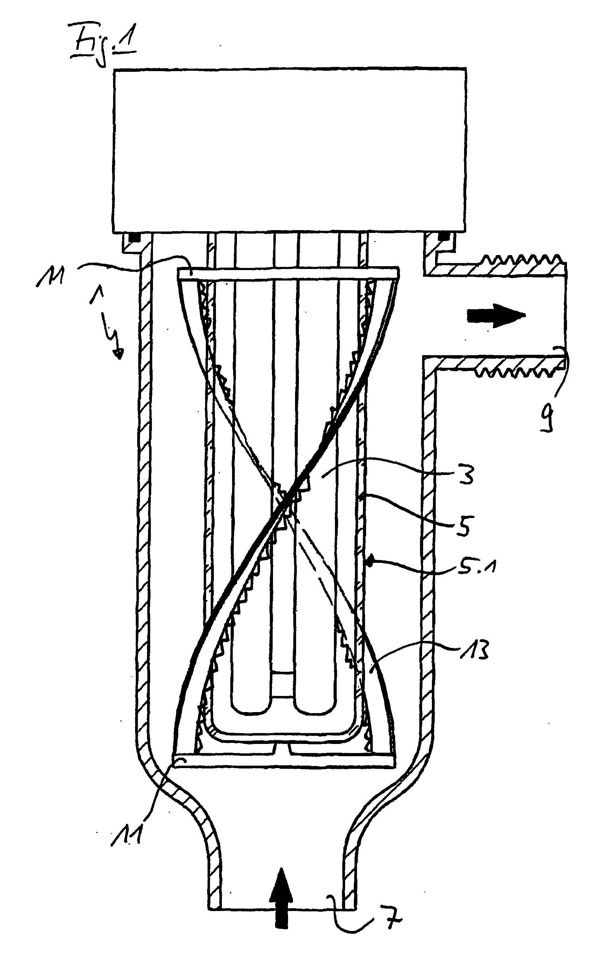

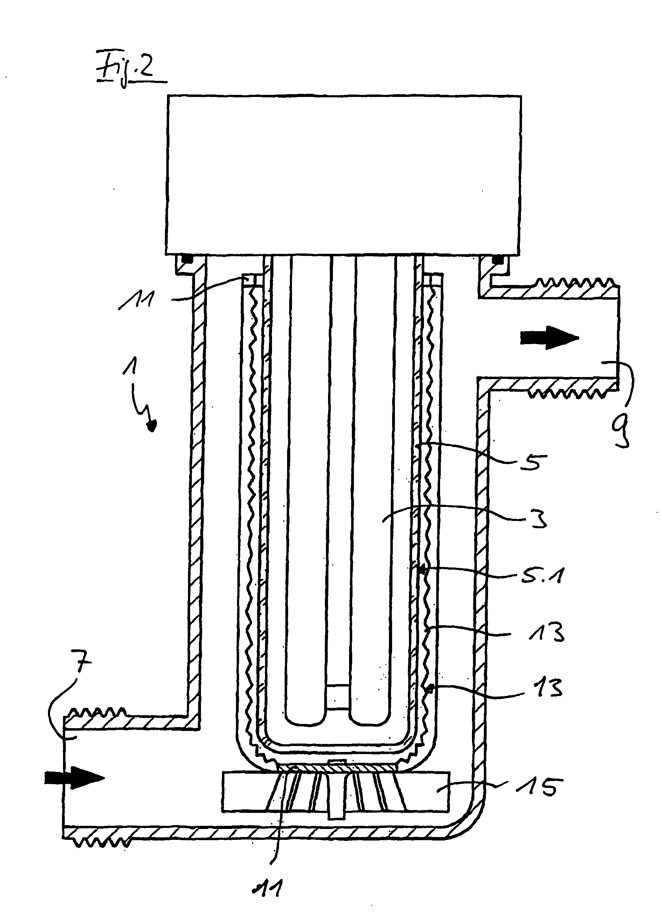

In Fig. 1 und Fig. 2 ist ein Strömungsgehäuse 1 dargestellt, das in einer Filtervorrichtung im Strömungsweg eines zu filternden Fluids angeordnet ist. In dem Strömungsgehäuse 1 ist eine UVC-Lampe 3 mit einem Lampengehäuse 5 eingesetzt, derart, daß das Lampengehäuse 5 von dem zu filternden Fluid umströmt werden kann und eine Hauptachse Z in vertikaler Richtung hat.. Das Lampengehäuse 5 ist zylinderförmig und weist wenigstens einen gerundeten Umfang auf. Nach oben ist das Strömungsgehäuse 1 dicht verschlossen, z. B. durch ein Vorschaltgerät und/oder einen Griff zum Herausnehmen der UVC-Lampe 3 zusammen mit dem Lampengehäuse 5.

In Fig. 1 hat das Strömungsgehäuse 1 eine Einlauföffnung 7, die unten oder bodenseitig ausgebildet ist, und eine Auslauföffnung 9, oben seitlich ausgebildet ist, so daß eine Strömung des zu filternden Fluids in Fig. 1 von unten nach oben erfolgt.

Um das Lampengehäuse 5 herum sind längs der Hauptachse Z in Abstand zueinander zwei Halteelemente 11 konzentrisch zu der Hauptachse Z angeordnet. Zwischen den Haltelementen 11 verlaufen zwei Reinigungselemente 13 schraubenförmig. Hierbei sind die beiden Reinigungselemente 13 einander diametral gegenüber angeordnet und beschreiben zwischen den Halteelementen 11 einen halben Gang.

Die nach oben gerichtet Strömung greift an die Reinigungselemente 13 an und bewirkt, daß sich diese um die fluidseitige Oberfläche 5.1 des Lampengehäuses 5 drehen. Die Drehachse D fällt mit der Hauptachse Z zusammen. Die Reinigungselemente 13 sind Stege, die schwammartig, borstenartig, vliesartig oder in einer anderen geeigneten Art und Weise ausgebildet sind, um mechanisch an die fluidseitige Oberfläche 5.1 anzugreifen und diese zu reinigen.

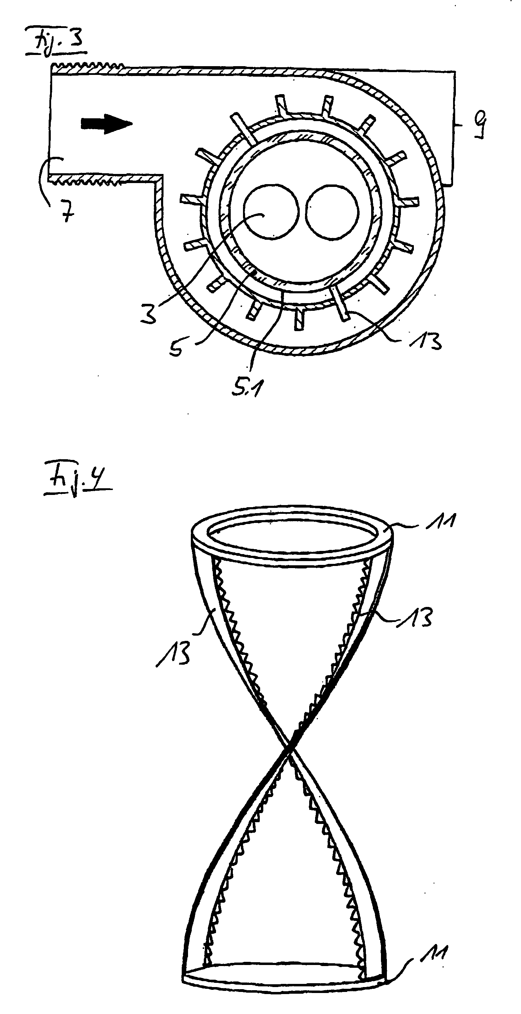

In Fig. 4 sind die Reinigungselemente 13 separat dargestellt. Die in Fig. 1 und Fig. 4 dargestellt und vorstehend beschriebene stehende Anordnung kann in anderen Ausführungsformen auch eine um 90° gedrehte, liegende Anordnung sein. Die Zuordnungen "oben" und "unten" verändern sich dann lediglich zu "seitlich links" bzw. seitlich rechts".

In Fig. 2 ist eine weitere Ausführungsform dargestellt. Zusätzlich zu den vorstehenden Merkmalen der ersten Ausführungsform weist diese Ausführungsform ein Schaufelrad 15 auf, das stromaufwärts in der Strömung des zu filternden Fluids und auf der Drehachse D angeordnet ist. Das Schaufelrad 15 ist in an sich bekannter Weise mit den Reinigungselementen 13 verbunden, so daß eine Drehung des Schaufelrads 15 auch eine Drehung der Reinigungselemente 13 und somit eine Reinigung der fluidseitigen Oberfläche 5.1 bewirkt.

Auch diese Ausführungsform kann außer stehend auch liegend angeordnet sein.

Die Einlauföffnung 7 und die Auslauföffnung 9 können diametral zueinander an den entsprechenden Enden oder Seiten des Strömungsgehäuses 1 angeordnet sein.

## Patentansprüche

1. Filtervorrichtung mit einer UVC-Lampe zum Filtern von Fluiden, mit einem Lampengehäuse (5), das in einer Strömung des zu filternden Fluids angeordnet ist und eine Hauptachse (Z) aufweist, mit einem ersten Reinigungselement (13), das in einem schraubenförmigen Verlauf in Berührung mit einer fluidseitigen Oberfläche (5.1) des Lampengehäuses (5) zwischen zwei Halteelementen (11) angeordnet ist und durch die Strömung des zu filternden Fluids um eine mit der Hauptachse (Z) zusammen fallende Drehachse (D) drehbar ist,
**dadurch gekennzeichnet,**
**daß** das schraubenförmig verlaufende Reinigungselement (13) zwischen den beiden Halteelementen (11) einen halben Gang beschreibt, und daß ein zweites schraubenförmig verlaufendes Reinigungselement (13) zwischen den beiden Halteelementen (11) angeordnet ist, das auch einen halben Gang beschreibt und dem ersten Reinigungselement (13) diametral gegenüber angeordnet ist.

2. Filtervorrichtung nach Anspruch 1,
**dadurch gekennzeichnet,**
**daß** auf der Drehachse (D) stromaufwärts ein Schaufelrad (15) angeordnet ist, das mit dem wenigstens einem Reinigungselement (13) wirkverbunden ist und in der Strömung des zu filternden Fluids liegt.

3. Filtervorrichtung nach einem der vorstehenden Ansprüche,
**dadurch gekennzeichnet,**
**daß** das Lampengehäuse (5) mit seiner Hauptachse (Z) stehend in einem Strömungsgehäuse (1) angeordnet ist, wobei eine Einlauföffnung (7) für das zu filternde Fluid im Strömungsgehäuse (1) unten ausgebildet ist und eine Auslauföffnung (9) für das gefilterte Fluid im Strömungsgehäuse (1) oben ausgebildet ist.

4. Filtervorrichtung nach Anspruch 1 oder 2,
**dadurch gekennzeichnet,**
**daß** das Lampengehäuse (5) mit seiner Hauptachse (Z) liegend in einem Strömungsgehäuse (1) angeordnet ist, wobei eine Einlauföffnung (7) für das zu filternde Fluid im Strömungsgehäuse (1) auf einer Seite ausgebildet ist und eine Auslauföffnung (9) für das gefilterte Fluid im Strömungsgehäuse (1) auf der anderen Seite ausgebildet ist.

5. Filtervorrichtung nach Anspruch 3 oder 4,
**dadurch gekennzeichnet,**
**daß** die Einlauföffnung (7) und die Auslauföffnung (9) diametral zueinander ausgebildet sind.

6. Filtervorrichtung nach einem der vorstehenden Ansprüche,
**dadurch gekennzeichnet,**
**daß** das wenigstens ein Reinigungselement (13) aus einem Reinigungssteg gebildet ist.

## Claims

1. Filter device with a UVC lamp for filtering fluids, with a lamp casing (5) which is arranged in a flow of the fluid to be filtered and which has a principal axis (Z) with a first cleaning element (13) which is arranged, with a helical path in contact with a surface (5.1) of the lamp casing (5) on the side facing the fluid, between two holding elements (11) and which can be rotated, by the flow of the fluid that is to be filtered, about an axis of rotation (D) which coincides with the principal axis (Z),
**characterised in that**
the cleaning element (13) with its helical path describes a half-movement between the two holding elements (11), and **in that** a second cleaning element (13) with a helical path is positioned between the two holding elements (11), which cleaning element also describes a half-movement and is positioned diametrically opposite to the first cleaning element (13).

2. Filter device as in claim 1,
**characterised in that**
a vane wheel (15) is positioned on the axis of rotation (D) upstream, which vane wheel is connected operatively to the at least one cleaning element (13) and lies in the flow of the fluid that is to be filtered.

3. Filter device as in one of the preceding claims,
**characterised in that**
the lamp casing (5) with its principal axis (Z) is positioned vertically in a flow casing (1), there being an inlet opening (7) in the flow casing (1) at the bottom for the fluid to be filtered, and an outlet opening (9) in the flow casing (1) at the top for the filtered fluid.

4. Filter device as in claim 1 or 2,
**characterised in that**
the lamp casing (5) with its principal axis (Z) is positioned horizontally in a flow casing (1), there being an inlet opening (7) in the flow casing (1) at one side for the fluid to be filtered, and an outlet opening (9) in the flow casing (1) at the other side for the filtered fluid.

5. Filter device as in claim 3 or 4,
**characterised in that**
the inlet opening (7) and the outlet opening (9) are made diametrically opposite to each other.

6. Filter device as in one of the preceding claims,
**characterised in that**
the at least one cleaning element (13) is in the form of a cleaning fin.

## Revendications

1. Dispositif de filtration avec une lampe UVC pour filtrer des fluides, avec un boîtier de lampe (5) qui est disposé dans un écoulement du fluide à filtrer et qui présente un axe principal (Z), avec un premier élément de nettoyage (13) qui est agencé suivant un tracé hélicoïdal en contact avec une surface côté fluide (5.1) du boîtier de lampe (5) entre deux éléments de maintien (11) et peut tourner par l'écoulement du fluide à filtrer autour d'un axe de rotation (D) coïncidant avec l'axe principal (Z),
**caractérisé en ce que** l'élément de nettoyage (13) s'étendant de façon hélicoïdale décrit une demi-spire entre les deux éléments de maintien (11) et **en ce qu'**un deuxième élément de nettoyage (13) s'étendant de façon hélicoïdale et agencé entre les deux éléments de maintien (11) décrit aussi une demi-spire et est agencé de manière diamétralement opposée au premier élément de nettoyage (13).

2. Dispositif de filtration selon la revendication 1,
**caractérisé en ce qu'**une roue à aubes (15) agencée en amont sur l'axe de rotation (D) est reliée activement avec au moins un élément de nettoyage (13) et est située dans l'écoulement du fluide à filtrer.

3. Dispositif de filtration selon l'une des revendications précédentes,
**caractérisé en ce que** le boîtier de lampe (5) est agencé avec son axe principal (Z) verticalement dans un boîtier d'écoulement (1), une ouverture d'entrée (7) pour le fluide à filtrer étant prévue en bas dans le boîtier d'écoulement (1) et une ouverture de sortie (9) pour le fluide filtré étant prévue en haut dans le boîtier d'écoulement (1).

4. Dispositif de filtration selon la revendication 1 ou 2,
**caractérisé en ce que** le boîtier de lampe (5) est agencé avec son axe principal (Z) horizontalement dans un boîtier d'écoulement (1), une ouverture d'entrée (7) pour le fluide à filtrer étant prévue d'un côté dans le boîtier d'écoulement (1) et une ouverture de sortie (9) pour le fluide filtré étant prévue de l'autre côté dans le boîtier d'écoulement (1).

5. Dispositif de filtration selon la revendication 3 ou 4,
**caractérisé en ce que** l'ouverture d'entrée (7) et l'ouverture de sortie (9) sont prévues de manière diamétralement opposée l'une à l'autre.

6. Dispositif de filtration selon l'une des revendications précédentes,
**caractérisé en ce qu'**au moins un élément de nettoyage (13) est formé par une nervure de nettoyage.
